Europäisches Patentamt

European Patent Office

Office européen des brevets

(11) Numéro de publication : **0 454 519 A1**

(19)

## (12) DEMANDE DE BREVET EUROPEEN

(21) Numéro de dépôt : **91400892.5**

(22) Date de dépôt : **02.04.91**

(51) Int. Cl.⁵ : **G01B 21/16, F22B 37/00**

(30) Priorité : **27.04.90 FR 9005442**

(43) Date de publication de la demande :
**30.10.91 Bulletin 91/44**

(84) Etats contractants désignés :
**BE CH DE ES LI SE**

(71) Demandeur : **FRAMATOME**
**Tour Fiat 1, Place de la Coupole**
**F-92400 Courbevoie (FR)**

(72) Inventeur : **Jarrige-Lemas, Claude**
**25 Quai Romain Rolland**
**F-69005 Lyon (FR)**

(74) Mandataire : **Jacobson, Claude et al**
**Cabinet Lavoix 2, Place d'Estienne d'Orves**
**F-75441 Paris Cedex 09 (FR)**

(54) **Dispositif de détection de l'extrémité d'une manchette disposée dans un tube, et porte-outil comportant un tel dispositif.**

(57) Ce dispositif de détection comprend :
— un support (4) adapté pour être introduit concentriquement dans le tube ;
— un palpeur (8) monté mobile sur le support entre une position de repos dans laquelle il fait saillie radialement au-delà de la paroi interne de la manchette et une position escamotée vers l'intérieur par rapport à cette paroi ;
— des moyens pour solliciter élastiquement le palpeur vers sa position de repos ; et
— un capteur (11) de la position du palpeur.
Application au manchonnage d'un générateur de vapeur d'un réacteur nucléaire à eau pressurisée.

FIG.1

La présente invention est relative à un dispositif de détection de l'extrémité d'une manchette disposée dans un tube. Elle s'applique en particulier au manchonnage des tubes des générateurs de vapeur des réacteurs nucléaires à eau pressurisée.

Dans les centrales nucléaires à eau pressurisée, la production de vapeur est assurée par des générateurs de vapeur. Ces générateurs de vapeur reçoivent de l'eau pressurisée primaire à une température élevée, obtenue par la circulation de l'eau primaire entre les éléments combustibles placés dans la cuve du réacteur.

L'eau primaire sous pression circule dans un nombre important de tubes échangeurs de chaleur du générateur de vapeur. Ces tubes, en forme de U, ont une faible section et une grande longueur. Lorsque l'eau du circuit secondaire, préchauffée, entre en contact avec les tubes, elle se vaporise pour fournir de la vapeur destinée à alimenter les turbines qui, elles-mêmes, feront tourner un alternateur pour produire de l'électricité.

Les tubes échangeurs de chaleur des générateurs de vapeur constituent un point extrêmement sensible et, compte tenu de leur faible épaisseur, ils représentent des éléments fonctionnels primordiaux du réacteur, qu'il faut surveiller constamment.

Aussi, lors des arrêts pour rechargement en combustible, ces tubes sont-ils régulièrement vérifiés pour s'assurer de leur intégrité, car la fuite où la rupture de l'un ou de plusieurs d'entre eux entraînerait l'arrêt immédiat du réacteur, afin de réaliser les interventions et réparations nécessaires à la mise hors service du ou des tubes concernés.

Lorsque des défauts dépassant les critères d'acceptabilité ont été décelés dans les tubes, il est nécessaire de les réparer. Une méthode couramment utilisée consiste à recouvrir le défaut à l'aide d'une manchette, de manière à assurer l'étanchéité entre le circuit primaire et le circuit secondaire et de permettre au tube de conserver son rôle fonctionnel.

La fixation de la manchette s'effectue par positionnement mécanique (dudgeonnage) puis par introduction dans le tube d'un porte-outil de soudage comportant par exemple un équipement de soudage laser. Il est donc nécessaire de connaître avec précision la position de l'extrémité de la manchette pour pouvoir positionner correctement le porte-outil.

L'invention a pour but de fournir un dispositif économique capable de déterminer la position de la manchette.

A cet effet, l'invention a pour objet un dispositif de détection de l'extrémité d'une manchette disposée dans un tube, caractérisé en ce qu'il comprend :

– un support adapté pour être introduit concentriquement dans le tube ;

– un palpeur monté mobile sur le support entre une position de repos dans laquelle il fait saillie radialement au-delà de la paroi interne de la manchette et une position escamotée vers l'intérieur par rapport à cette paroi;

– des moyens pour solliciter élastiquement le palpeur vers sa position de repos ; et

– un capteur de la position du palpeur.

Suivant d'autres caractéristiques de l'invention :

– dans sa position de repos, le palpeur est en retrait par rapport à la paroi interne du tube;

– le palpeur est une lamelle élastique bombée dont une première extrémité est fixée au support et dont la seconde extrémité est mobile par rapport à ce dernier;

– le capteur est un détecteur de proximité monté sur le support en regard de la seconde extrémité de la lamelle ;

– le capteur est une jauge d'extensométrie associée à la première extrémité de la lamelle ;

– le palpeur est un levier sollicité par un ressort vers sa position de repos ;

– le support porte au moins deux palpeurs disposés dans des plans radiaux différents ;

– le support porte au moins deux capteurs associés à des palpeurs différents ;

– le palpeur est un anneau élastique monté flottant dans son plan, parallèlement à l'axe du tube, et entourant une butée.

L'invention a également pour objet un porte-outil destiné à la fixation d'une manchette dans un tube, ce porte-outil comprenant un dispositif de détection tel que défini ci-dessus dont le support est solidaire du porte-outil.

Des exemples de réalisation de l'invention vont maintenant être décrits en regard des dessins annexés, sur lesquels :

– la Fig. 1 est une vue en coupe longitudinale d'un dispositif de détection de manchette conforme à l'invention ;

– la Fig. 2 est une vue analogue d'un autre mode de réalisation du dispositif suivant l'invention;

– la Fig. 3 est une vue prise en coupe suivant la ligne brisée III-III de la Fig. 2 ;

– la Fig. 4 représente en coupe longitudinale un troisième mode de réalisation du dispositif suivant l'invention ;

– la Fig. 5 est une vue, prise en coupe suivant la ligne V-V de la Fig. 6, d'un quatrième mode de réalisation du dispositif suivant l'invention ;

– la Fig. 6 est une vue prise en coupe suivant la ligne VI-VI de la Fig. 5 ; et

– la Fig. 7 est une vue dont la moitié supérieure est une coupe prise suivant la ligne VII-VII de la Fig. 5.

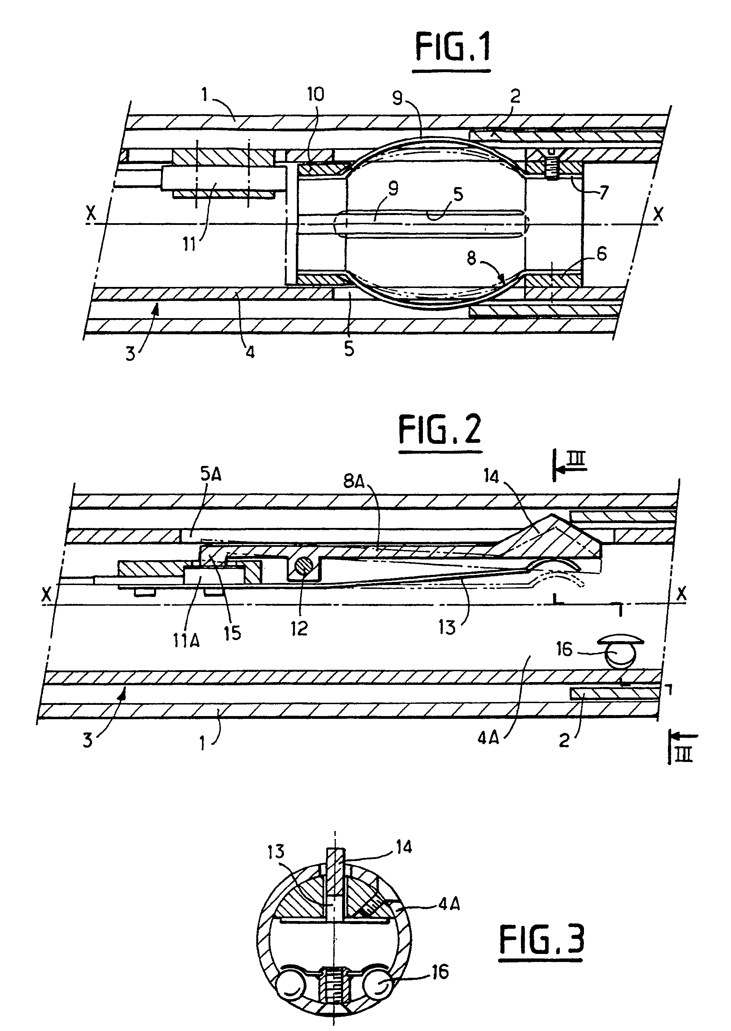

On a représenté à la Fig. 1 un tube 1 de générateur de vapeur qu'il s'agit de réparer par recouvrement interne de sa zone défectueuse au moyen d'une manchette 2 dont seule l'extrémité amont est visible sur le dessin. Cette manchette est supposée avoir été préalablement positionnée dans le tube par dudgeonnage de sa partie courante (non visible sur le dessin).

Dans le présent mémoire, les mots "amont" et "aval" s'entendent par rapport au sens d'introduction du porte-outil dans le tube, qui est de gauche à droite en considérant les Fig. 1, 2, 4, 5 et 7.

Pour fixer la manchette 2 de façon étanche dans le tube, un porte-outil 3 pourvu de moyens de centrage appropriés (non représentés) est introduit concentriquement dans le tube 1. Ce porte-outil, dont seules les parties concernant la présente invention ont été représentées, est muni à son extrémité aval (non visible sur le dessin) d'une tête de soudage rotative, par exemple d'une tête de soudage laser. Le problème consiste à positionner correctement cette tête de soudage par rapport à la manchette.

Pour cela, une partie du porte-outil forme un support tubulaire 4 présentant quatre fentes longitudinales 5 situées à 90° les unes des autres autour de l'axe X-X du tube 1. Une bague 6 est fixée dans le support 4 juste en aval de ces fentes, et l'extrémité aval 7 de quatre lamelles élastiques 8 est fixée sur cette bague.

Chaque lamelle 8 a une forme bombée vers l'extérieur, sa partie courante 9 traversant librement la fente 5 associée. Les extrémités amont des quatre lamelles sont fixées à une bague 10 qui peut coulisser avec un faible jeu dans la partie du support 4 située juste en amont des fentes 5.

Le dispositif comprend encore un détecteur de proximité 11 fixé dans le support 4 à une petite distance en amont de la bague 10 lorsque les lamelles 9 sont au repos.

Comme on le voit à la Fig. 1, au repos, les lamelles 9 s'inscrivent dans un cylindre dont le diamètre est légèrement inférieur au diamètre intérieur du tube 1 mais est supérieur à celui de la manchette 2. Lorsque le porte-outil avance dans le tube et que la tête de soudage est presque arrivée à sa position longitudinale désirée dans la manchette, les lamelles 9 butent contre la tranche amont de cette dernière, qui les force à s'aplatir quelque peu vers l'axe X-X.

Ce faisant, comme l'extrémité aval des lamelles est solidaire du porte-outil, leur extrémité amont se déplace vers l'amont par rapport à celui-ci, de sorte que la bague 10 se déplace vers le détecteur de proximité 11, comme indiqué en traits mixtes à la Fig. 1. Ce détecteur émet alors un signal approprié qui permet de connaître la position exacte de la tête de soudage par rapport à la manchette.

On remarque que la structure du dispositif assure d'elle-même un centrage du porte-outil par rapport à la manchette.

Dans le mode de réalisation de la Fig. 2, les lamelles 8 sont remplacées par un levier longitudinal 8A articulé en un point intermédiaire autour d'un axe transversal 12 solidaire du support 4A. Un ressort 13 fixé sur ce support sollicite l'extrémité aval 14 du levier 8A vers l'extérieur, à travers une fenêtre 5A du support. Ce basculement est limité par l'appui de l'extrémité amont 15 du levier contre un capteur de force 11A fixé dans le support 4A. Le dispositif comprend également deux billes 16 de centrage du support 4A dans la manchette 2. Ces billes sont disposées dans un plan transversal du support situé légèrement en aval de l'extrémité aval du levier 8A, à 120° de celle-ci (Fig. 3), et font légèrement saillie sur la surface extérieure du support.

Au repos, l'extrémité 14 du levier fait légèrement saillie radialement au-delà de la paroi extérieure de la manchette. Lorsque le support 4A pénètre dans celle-ci, les billes 16 prennent appui sur la surface intérieure de la manchette, puis l'extrémité 14 du levier, dont la face avant est convergente vers l'aval, bute contre la tranche d'extrémité amont de la manchette et est repoussée par celle-ci vers l'axe X-X, comme indiqué en traits mixtes sur la Fig. 2. Ce mouvement décolle l'extrémité amont 15 du levier du capteur de force 11A, et ce dernier émet un signal correspondant.

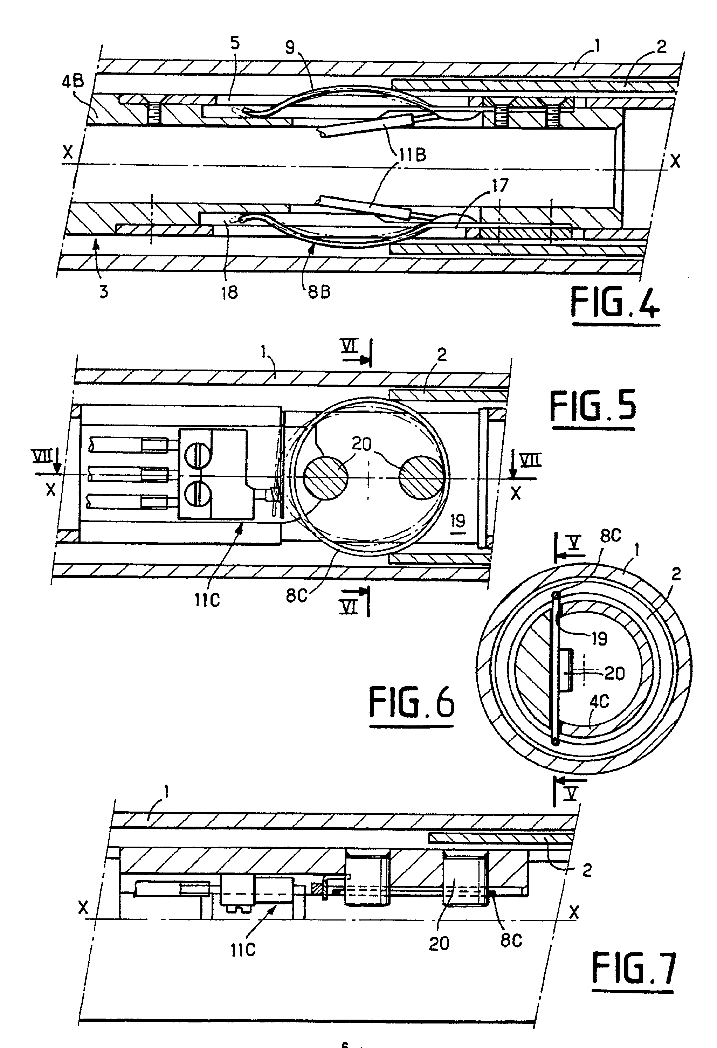

Dans le mode de réalisation de la Fig.4, on retrouve deux lamelles 8B analogues aux lamelles 8 de la Fig. 1. Cependant, l'extrémité aval de ces lamelles comporte un prolongement amont 17 en porte à faux, et leur extrémité amont s'appuie librement sur une portée cylindrique 18 du support 4B. Lorsque la partie courante 9 des lamelles heurte la tranche d'extrémité amont de la manchette, leur aplatissement provoque un déplacement vers l'amont, par rapport au support, de leurs extrémités amont, comme indiqué en traits mixtes sur la Fig. 4, et une déformation des prolongements 17. Cette déformation est détectée par deux jauges d'extensométrie 11B associées respectivement à ces deux prolongements, lesquelles jauges émettent un signal approprié.

La détection de la déformation des deux lamelles permet de s'assurer que le signal émis ne correspond pas à une déformation non prévue de la paroi du tube 1. De plus, les jauges d'extensométrie permettent d'effectuer une mesure quantitative de la déformation des lamelles, ce qui peut constituer une information utile.

Dans le mode de réalisation des Fig. 5 à 7, un anneau circulaire 8C en acier à ressort est monté flottant dans un espace 19 en forme de fente, parallèle à l'axe X-X, prévu dans le support 4C, et coiffe avec jeu deux plots 20 qui s'étendent à travers cet espace.

Au repos, l'anneau 8C prend une position indéterminée, par exemple en appui sur les plots 20. Lorsqu'il aborde la manchette, il se centre par rapport à celle-ci, puis le plot avant provoque son aplatissement dans son plan, comme représenté en traits mixtes sur la Fig. 5. L'extrémité amont de l'anneau actionne alors un microrupteur 11C porté par le support 4C.

Comme dans le cas de la Fig. 4, ce mode de réalisation évite toute information parasite due à une déformation non prévue de la paroi du tube 1.

Dans tous les cas, le dispositif selon l'invention peut être utilisé pour détecter de façon précise des manchettes, afin de positionner des outillages tels que, par exemple, une canne de soudage laser, une canne de traitement thermique, ou une canne de contrôle ultra-sons. A ce sujet, on remarque que dans tous les modes de réalisation, le dispositif de détection de la manchette comporte une ou plusieurs ouvertures par lesquelles on peut faire passer l'eau nécessaire à la réalisation d'un contrôle par ultra-sons.

## Revendications

1. Dispositif de détection de l'extrémité d'une manchette (2) disposée dans un tube (1), caractériré en ce qu'il comprend :
   – un support (4 ; 4A ; 4B ; 4C) adapté pour être introduit concentriquement dans le tube ;
   – un palpeur (8 ; 8A ; 8B ; 8C) monté mobile sur le support entre une position de repos dans laquelle il fait saillie radialement au-delà de la paroi interne de la manchette et une position escamotée vers l'intérieur par rapport à cette paroi ;
   – des moyens pour solliciter élastiquement le palpeur vers sa position de repos ; et
   – un capteur (11 ; 11A ; 11B ; 11C) de la position du palpeur.

2. Dispositif suivant la revendication 1, caractérisé en ce que, dans sa position de repos, le palpeur (8 ; 8A ; 8B ; 8C) est en retrait par rapport à la paroi interne du tube (1).

3. Dispositif suivant la revendication 1 ou 2, caractérisé en ce que le palpeur (8 ; 8B) est une lamelle élastique bombée dont une première extrémité (7) est fixée au support (4 ; 4B) et dont la seconde extrémité est mobile par rapport à ce dernier.

4. Dispositif suivant la revendication 3, caractérisé en ce que le capteur (11) est un détecteur de proximité monté sur le support (4) en regard de la seconde extrémité de la lamelle (8).

5. Dispositif suivant la revendication 3, caractérisé en ce que le capteur (11B) est une jauge d'extensométrie associée à la première extrémité de la lamelle (8B).

6. Dispositif suivant la revendication 1 ou 2, caractérisé en ce que le palpeur (8A) est un levier oscillant sollicité par un ressort (13) vers sa position de repos.

7. Dispositif suivant l'une quelconque des revendications 1 à 6, caractérisé en ce que le support (4 ; 4B) porte au moins deux palpeurs (8 ; 8B) disposés dans des plans radiaux différents.

8. Dispositif suivant la revendication 7, caractérisé en ce que le support (4B) porte au moins deux capteurs (11B) associés à des palpeurs (8B) différents.

9. Dispositif suivant la revendication 1 ou 2, caractérisé en ce que le palpeur (8C) est un anneau élastique monté flottant dans son plan, parallèlement à l'axe du tube, et entourant une butée (20).

10. Porte-outil (3) destiné au travail dans un tube (1) équipé d'une manchette (2), caractérisé en ce qu'il comprend un dispositif de détection suivant l'une quelconque des revendications 1 à 9, dont le support (4 ; 4A ; 4B ; 4C) est solidaire du porte-outil.

EP 0 454 519 A1

## FIG.1

## FIG.2

## FIG.3

FIG.4

FIG.5

FIG.6

FIG.7

**Office européen des brevets**

# RAPPORT DE RECHERCHE EUROPEENNE

Numero de la demande

EP 91 40 0892

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 898 741 (BRITISH NUCLEAR FUELS LTD) * Colonne 2, ligne 57 - colonne 5, ligne 52; fig. * | 1,5-8 | G 01 B 21/16 F 22 B 37/00 |
| A | FR-A-2 595 439 (P. THOME) * Page 3, ligne 35 - page 4, ligne 9 * | 1 | |
| A | FR-A-1 232 835 (SULZER) * Page 2, colonne de gauche, alinéas 5-6; fig. * | 9 | |
| A | FR-A-1 391 176 (THE ENGLISH ELECTRIC CO., LTD) * Page 2, colonne de droite, alinéa 3 - fin * | 1,6-8 | |
| A | FR-A-2 593 421 (J.P. THOME) * Figures 2,3 * | 1,2 | |

**DOMAINES TECHNIQUES RECHERCHES (Int. Cl.5)**

G 01 B 21
F 22 B 37

Le présent rapport a été établi pour toutes les revendications

| Lieu de la recherche | Date d'achèvement de la recherche | Examinateur |
|---|---|---|
| LA HAYE | 28-06-1991 | RAMBOER P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)